Europäisches Patentamt

European Patent Office

Office européen des brevets

(19)

(11) Publication number: **0 316 514**

**A1**

(12) **EUROPEAN PATENT APPLICATION**

(21) Application number: **88111509.1**

(51) Int. Cl.⁴: **H01J 49/40**

(22) Date of filing: **18.07.88**

(30) Priority: **18.11.87 US 122108**

(43) Date of publication of application:
**24.05.89 Bulletin 89/21**

(84) Designated Contracting States:
**DE GB**

(71) Applicant: **ALLIED-SIGNAL INC.**
**Columbia Road and Park Avenue P.O. Box 2245R**
**Morristown New Jersey 07960(US)**

(72) Inventor: **Blanchard, William Carroll c/o**
**Allied-Signal, Inc.**
**P.O.Box 2245R Columbia RD. & Park Ave.**
**Morristown, N. J. 07960(US)**
Inventor: **Green, Norman c/o Allied-Signal, Inc.**
**P.O.Box 2245R Columbia RD. & Park Ave.**
**Morristown, N. J. 07960(US)**

(74) Representative: **Chereau, Pierre Louis et al**
**Novapat-Cabinet Chereau Rue du Valais 9**
**CH-1202 Genève(CH)**

(54) Switched field ion mobility spectrometry (IMS).

(57) An ion mobility spectrometer (10) is described incorporating a reaction region (14), shuter grid (34) and a drift region (32), a plurality of conductive elements (40-44) are spaced along a longitudinal axis (36) for generating an electric field therein, each conductive element (40-44) coupled to a tap (49-53) which in turn is coupled to a switch (75-79) which is responsive to control signals for coupling either a positive, ground, negative or no voltage to the respective tap (49-53). A controller (120) provides control signals to selected switches (71-81) which are sequenced in time to control selected ions (30) of a given mobility Ko in the reaction region (14) or in the drift region (32). The invention overcomes the problem of coupling large voltages across the entire reaction region (14) or across the entire drift region (32).

FIG 1

EP 0 316 514 A1

## Switched Field Ion Mobility Spectrometry

Cross Reference to Related Application

Cross Reference is made to U.S. Application Serial No. 881,871, filed on July 3rd, 1986, entitled "Electric Field Control in Ion Mobility Spectrometry" by W.C. Blanchard, the inventor herein and assigned to the assignee herein which is directed to controlling selected ions by utilizing a sequence of linear and non-linear electric fields in the drift region.

Background of the Invention

Field of the Invention:

This invention relates to ion mobility spectrometers and more particularly to switching voltages between taps to generate an electric field in portions of the reaction region and drift region.

Description of the Prior Art:

The techniques of using ion mobility spectrometry at atmospheric pressure has been well established. The major parts of an ion mobility spectrometer (IMS) are: the sample inlet, reaction region, shutter grid, drift region and collector. In conventional IMS, a uniform or linear field, for example, 200 volts per centimeter, is applied across the reaction region and drift region. The electric field in the reaction region moves the ions from the ion source such as nickle[63] to the shutter grid. When the shutter grid is pulsed, the ions will enter the drift region. A typical drift region of an IMS is typically 10 centimeters long. This length will provide a measurable separation of ions of different molecular structures that have a mobility range of $Ko = 1$ to 2. These ions fall in the range of atomic mass units "AMU'S" between approximately 50 and 500. Currently an electric field is applied over the total IMS structure which has a length of approximately 15 centimeters. At a field strength of 200 volts per centimeter, a potential of 3000 volts is required across the IMS. This high potential must be controlled and reversed in order to obtain the signatures of both positive and negative ions.

The electric field in the drift region of an ion mobility spectrometer may be provided in 2 ways. The first way is described in U.S. Patent 4,378,499 which issued on March 29th, 1983 to G.E. Spangler, D.N. Campbell and S. Seeb wherein the drift region has a longitudinal axis and is surrounded by a plurality of concentric conductive rings 22 separated from one another by a plurality of insulating rings 23 which are secured into a unitary cylindrical body. A voltage divider 24 connected across the output of a high voltage bias source 25 applies progressingly increasing voltages to the conductive rings 22 thereby creating the electric field.

A second method for generating an electric field in the drift region is shown in U.S. Patent 4,390,784 which issued on June 28th, 1983 to D.R. Browning et al. In '784 a tube 14a has a thick film resistor 34 coated on its inside surface. A voltage potential difference represented by 36a and derived from high voltage source 36 is impressed across resister 34 thus causing an electrostatic drift field in drift region 14 which moves ions toward a collector. Tube 14a is cylindrical in shape.

In general, ionized small molecules can accommodate higher electric fields than large molecules. However, the electric field that is used in IMS devices, is not variable or optimized to the maximum that the ion of interest could accommodate. The electric field is not optimized because of the difficulties involved in changing the high voltage.

The high voltage requirements in the range from 2000-3000 volts can be satisfied using suitable electron tube techniques with a considerable size and power budget. The design of solid state, simple, reliable high voltage switching circuits that could accommodate the above voltages poses significant engineering problems. Positive voltages of up to 1500 volts can be switched using NPN junction transisters, however, these transisters generally exhibit low gain and high leakage currents. Metal oxide semiconductor field effect transistors "MOSFET'S" N channel devices are useful only to about 500 volts. For switching negative voltages, PNP junction transistors are available only to approximately 500 volts and the P CHANNEL MOSFETS to about 200 volts. For switching higher negative voltages, transformer coupled NPN devices are frequently used.

In the past, the drift region of the IMS device has been made shorter and the electric field reduced so that the limitations of the power supply could be accommodated especially for IMS devices that require both positive and negative modes. The shortening of the drift region of the IMS device results in a degradation of the resolution of ions of different mobilities. Ions with different mobilities separate in the drift region because they have the different velocities; therefore the shorter the drift region, the lower the ability of the IMS device to resolve between dissimilar ions. Furthermore, a low field strength in the drift region due to power supply considerations, also reduces the resolution of ions of different mobility by allowing the ions to remain in the drift region longer than required and therefore allows the ions a longer time to diffuse and spread apart. When the ions of different mobility Ko's spread into each other, their identities as a function of mobility Ko cannot be resolved.

## Summary of the Invention

A method and apparatus is described for detecting ions comprising a first inlet for passing a sample gas to be detected into a reaction region, the reaction region having a second inlet for admitting a carrier gas, the reaction region having a means for ionizing the sample gas such as nickel[63] to form ions of the sample gas, the reaction region having a means for generating an electric field therein such as by a plurality of concentric conductive rings separated from one another to move ions of the sample gas towards a drift region, the drift region having a shutter grid for holding the sample ions at first times and for admitting the sample ions at second times into the drift region, the drift region having a longitudinal axis, the drift region having a plurality of spaced apart conductive elements for generating an electrical field in the drift region parallel to the longitudinal axis, each conductive element which may be for example a concentric conductive ring, has a tap for connecting a voltage thereto, each tap coupled to an element control circuit, each element control circuit responsive to control signals from a controller for coupling a voltage of a selected magnitude to the respective tap, the controller, for example, a microprocessor, generates respective control signals at appropriate times, wherein selected taps are coupled to voltages at selective times to move selected ions with an electric field in a portion of the drift region, the drift region having a collector for collecting charge from the sample ions and an amplifier circuit coupled to the collector for generating a signal indicative of the quantity of ions collected by the collector.

It is an object of the invention, to control the electric field by switching only relatively low potentials to selected conductive elements to form the electric field.

It is a further object of the invention to couple a low voltage power supply to two conductive elements or locations on the IMS structure, the separation between the two conductive elements or locations is made so that an electric field of the proper magnitude is generated.

It is a further object of the invention to provide an element control circuit which may couple a positive, ground or negative potential to a conductive element forming the electric field in either the reaction region or drift region.

It is a further object of the invention to disconnect the power supply momentarily from the IMS structure as the ions of interest move and approach the edge of the electric field, and then to reconnect the power supply to two new locations on the IMS structure such that the ions of interest will continue to move in the desired direction.

It is a further object of the invention to switch potentials from one conductive element or location to another location on the IMS structure, at appropriate times such that the ions of interest are always controlled and are moved so that the ions of interest can be detected and identified.

It is a further object of the invention to optimize the electric field strength for the ion of interest by varying the separation between the conductive elements or locations on the IMS where the power supply is connected.

## Brief Description of the Drawing

Figure 1 is a schematic diagram of one embodiment of the invention.
Figure 2 is a schematic diagram of an element control circuit shown in Figure 1.

Description of the Preferred Embodiment

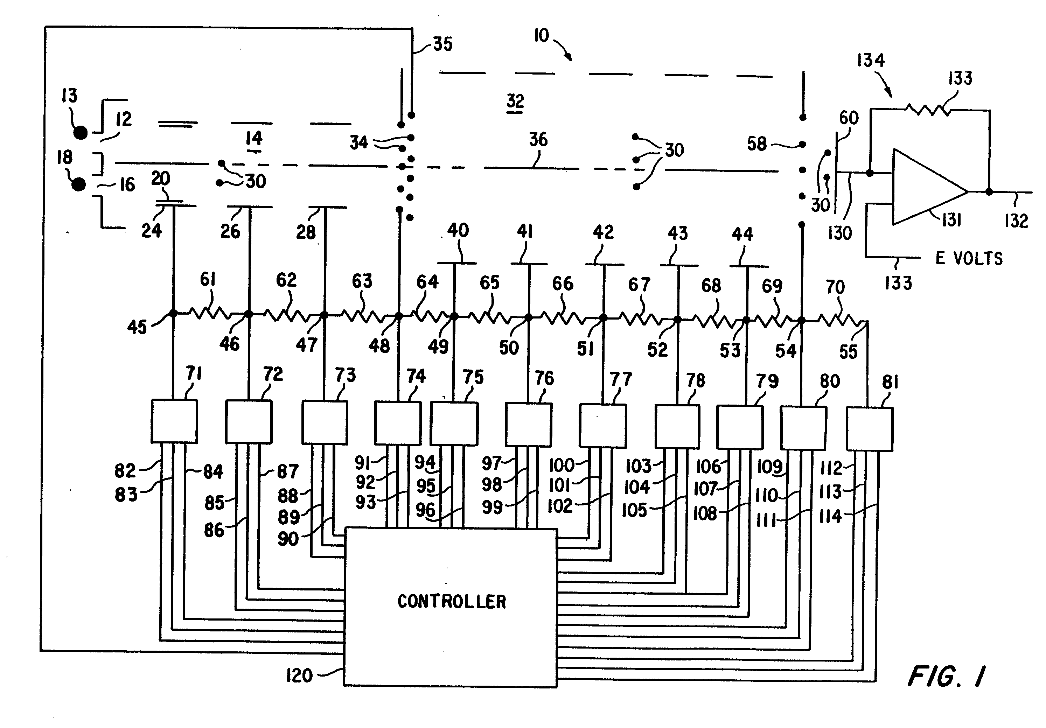

Referring to Figure 1, a schematic diagram of an ion mobility spectrometer 10 for detecting ions is shown. A first inlet 12 functions to pass a sample gas (13) to be detected into a reaction region 14. The reaction region 14 has a second inlet 16 for admitting a carrier gas 18. The reaction region 14 has a means for ionizing the sample gas 13 such as by a metal foil 20 which may be for example nickel[63] which emits beta particles. The reaction region 14 has a means for generating an electric field therein such as by a plurality of concentric rings 24, 26, and 28 to move ions 30 of the sample gas 13 towards a drift region 32.

Drift region 32 has a shutter grid 34 for holding sample ions 30 at the first times and for releasing or admitting the sample ions 30 at second times into the drift region 32. The drift region has a longitudinal axis 36. The reaction region may have a longitudinal 36 also. Drift region 32 has a plurality of spaced apart conductive elements 40-44 which may be for example concentric rings for generating an electric field in drift region 32 parallel or substantially parallel to longitudinal axis 36. Each conductive element 40-44 and concentric rings 24, 26 and 28 has a tap or terminal 49-53 and 45-47 respectively for connecting a voltage thereto wherein the voltage or potential between taps determines the strength of the electric field within the reaction region 14 or drift region 32 or both.

Shutter grid 34 has a terminal or tap 48 and apperture grid 58 has terminal or tap 54. Apperture grid 58 is positioned in front of collector 60 to provide an electric static shield with respect to collector 60. As shown in Figure 1 taps 45 through 55 are coupled in series by way of resistors 61-70 which provide a resistor network for dividing the voltages between various taps.

Each tap 45-55 is coupled to an element control circuit 71 through 81 respectively. Each element control circuit 71-81 is coupled to control signals over leads 82-114 and is responsive to the logic level of the control signals for coupling a voltage of a selected magnitude and polarity to its respective tap.

Controller 120 functions to generate respective control signals 82-114 coupled to respective element control circuits 71-81. The control signals will specify a voltage and time for the voltage to be applied to the conductive element or will provide a respective timing signal to indicate the appropriate time for applying the voltage to the conductive element. Controller 120 therefore may through its control signals switch voltages along the taps to provide an electric field in the IMS to move ions located between the respective taps to collector 60. By applying voltages at selected taps, the desired electric field may be generated in the IMS in the region of interest where the ions are with relatively low voltages rather than having to impress a large voltage across the entire drift region 32 or reaction region 14.

Drift region 32 has a collector 60 for collecting charge from sample ions 30 which is coupled over lead 130 to an input of amplifier 131 for generating a signal indicative of the quantity of ions collected by collector 60. Amplifier 131 has an output over lead 132 which has a resistor 133 coupled between leads 130 and 132. A second input of amplifier 131 is coupled over lead 133 to a positive or negative reference voltage depending on the polarity of the drift region which may be for example plus or minus one volt.

One example of an ion mobility spectrometer having conductive elements, a plurality of concentric rings, is found in U.S. Patent 4,378,499 by G.E. Spangler et al which issued March 29, 1983 which is incorporated herein by reference to show the structure of an IMS.

In operation the ion mobility spectrometer 10 shown in Figure 1 solves the problem of providing a high voltage power supply by controlling and switching only relatively low potentials. Both the positive and negative terminals of a low voltage power supply are electronically connected by means of element control circuits 71-81 to two locations or taps 45-55 on IMS 10. The separation between the two taps or locations is made such that an electric field of the proper magnitude is generated. The polarity of the ions of interest in the IMS, and the polarity of the power supply connections by way of element control circuits 71-81 to the IMS, are such that the desired direction of the ions is achieved. As the sample ions 30 of interest move and approach the edge of the electric field, that is the location where either the positive or negative terminals of the power supply are connected by way of element control circuit 71-81, the power supply is momentarily electronically disconnected from the tap or location 45-55 and then reconnected at two new locations selected from taps 45-55 on IMS 10 such that the sample ions 30 of interest will continue to move in the desired direction.

The power supply is switched from one location to another location 45-55 on IMS 10, at appropriate times such that the sample ions 30 of interest are always controlled and are moved such that they can be detected and identified at collector 60. Ions that have Ko's that are above or below the Ko of the ions of interest are allowed to bunch in front of the ions of interest at the front edge of the electric field or they fall behind the position or rear edge of the electric field. The ions may be moved toward collector 60 or reversed back and forth prior to arrival at collector 60.

The sample ions 30 of interest that will be controlled and detected can be changed to a higher or lower Ko by increasing or decreasing the time that the low voltage power supply remains connected to each of the taps or locations it will be connected to on IMS 10.

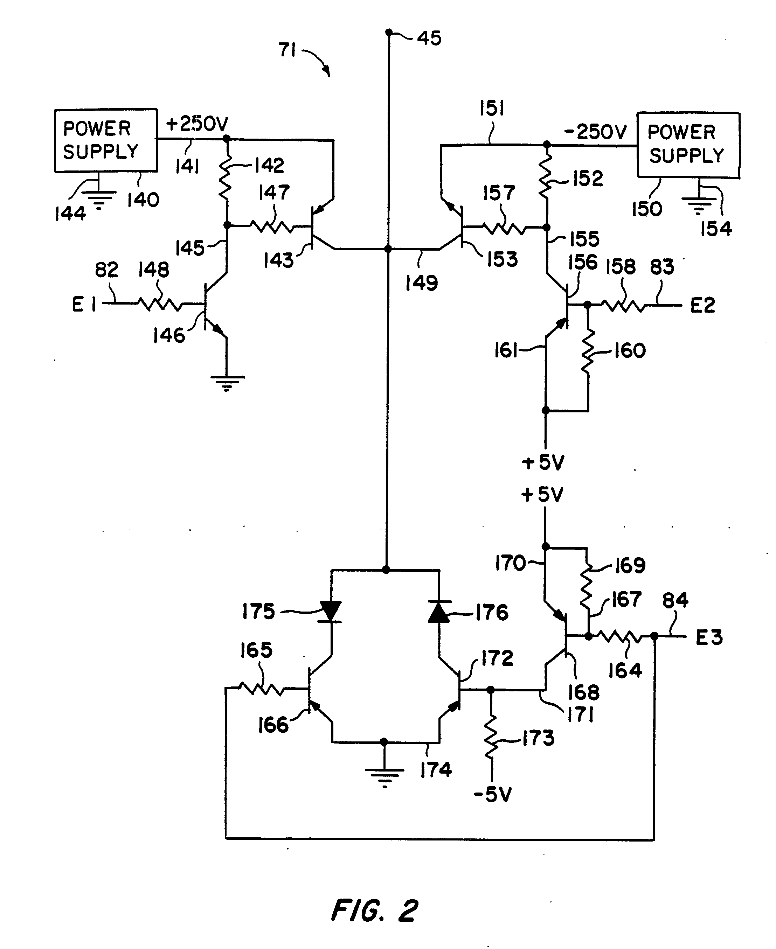

The electric field strength can be optimized for the ion of interest by varying the separation between the taps or locations 45-55 on the IMS where the power supply or voltage is connected by way of element control circuits 71-81. If the electric field is to be increased, then the number of times that the power supply 140 or 154 shown in Figure 2 must be switched by way of element control circuits 71-81 along IMS 10 is increased since the incremental distance between each connection of the power supply is reduced. An inceased electric field will cause an increased velocity to the sample ions 30 of interest and therefore reduce the time that the sample ions 30 of interest remain in the electric field generated between two locations. This requires that the power supply connections by way of element control circuits 71-81 to taps or locations 45-55 be switched more frequently.

This technique may be used in reaction region 14 of IMS 10. The ion source, metal foil 20, generates ions of all available Ko's during the time increment that the one terminal of the power supply is connected via element control circuit 71 to tap 45 and the other power supply terminal is connected via one of the element control circuits 72-81 to tap or location 46-55. All of the sample ions 30, each starting at the time and position where they are created, move toward shutter grid 34 if they are of the proper polarity or towards the source terminal 45 if they are oppositely polarized. Sample ions 30 of interest can be moved from the ion source, metafoil 20, to shutter grid 34 by using the same electric field intensity and time sequence as is used in drift region 32. The sample ions 30 of interest and ions of similar Ko's will arrive at the shutter grid 34 during the time increment that the electric field is applied at shutter grid 34. Shutter grid 34 is pulsed as it is normally by way of lead 35, but high voltage isolation is not required for lead 35 or the grid control circuit which may be provided by controller 120. In the past, the potential at shutter grid 34 may be as high as 2000 volts.

It is recognized that controller 120 may control several element control circuits, more than two, to place a simultaneous potential on selected taps 45-55 of positive or negative voltages or ground potential.

Figure 2 is a schematic diagram of element control circuit 71 which may also be used for element control circuit 72-81. In Figure 2 the positive terminal of a power supply 140 which may be at a potential of for example 250 volts is coupled over lead 141 to one side of resistor 142 and to the emitter of transistor 143. The other side of power supply 140 is coupled over lead 144 to ground potential. The other side of resistor 142 is coupled over lead 145 to the collector of transistor 146 and to one side of resistor 147. The other side of resistor 147 is coupled to the base of transistor 143. The emitter of transistor 146 is coupled to ground potential. Lead 82 is coupled through resistor 148 to the base of transistor 146. The collector of transister 43 is coupled over lead 149 to tap 45.

Power supply 150 which may have a potential of for example minus 250 volts is coupled over lead 151 to one side of resistor 152 and to the emitter of transistor 153. The other side of power supply 150 is coupled over lead 154 to ground potential. The other side of resistor 152 is coupled over lead 155 to the collector of transistor 156 and to one side of resistor 157. The other side of resistor 157 is coupled to the base of transistor 153. Lead 83 is coupled through resistor 158 to the base of transistor 156. The base of transistor 156 is also coupled through resistor 160 and over lead 161 to a voltage source of plus 5 volts and to the emitter of transistor 156. The collector of transistor 153 is coupled over lead 149 to tap 45.

Lead 84 is coupled to one side of resistor 164 and through resistor 165 to the base of transistor 166. The other side of resistor 164 is coupled over lead 167 to the base of transistor 168 and through resistor 169 over lead 170 to a voltage source of plus 5 volts and to the emitter of transistor 168. The collector of transistor 168 is coupled over lead 171 to the base of the transistor 172 and through resistor 173 to a voltage source of minus 5 volts potential. The emitter of transistors 166 and 172 is coupled over lead 174 to ground potential. The collector of transistor 166 is coupled to the cathode of diode 175. The anode of diode 175 is coupled over lead 149 to tap 45 and to the cathode of diode 176. The anode of diode 176 is coupled to the collector of transistor 172.

In operation, element control circuit 71 can switch tap 45 to power supply 140 at plus 250 volts or to power supply 150 at minus 250 volts or to ground potential. Element control circuit 71 is at standard logic levels of plus 5 volts and 0 volts for control signals E1, E2, and E3 on leads 82, 83, and 84 respectively. Element control circuit 71 uses junction semiconductors of the NPN type for transistors 146, 153 and 166 and of the PNP type for transistors 143, 156, 168 and 172.

In operation when logic level E1 on lead 82 is at plus 5 volts transistor 146 is conducting pulling current from the emitter to the base through transistor 143 causing transistor 143 to be conducting coupling power supply 140 and lead 141 to lead 149. When control signal E1 is at 0 volts, transistor 146 and 143 are non-conducting and lead 141 is isolated from lead 149.

When control signal E2 is at plus 5 volts, transistors 156 and 153 are non-conducting and lead 151 is isolated from lead 149. When control signal E2 is at 0 volts, transistor 156 is conducting providing base drive to transistor 153 causing transistor 153 to be conducting coupling lead 149 to lead 151 which is at a potential of power supply 150.

When control signal E3 is at plus 5 volts, transistor 166 is conducting and transistor 168 is non-conducting. Transistor 172 is conducting by way of base drive provided by resistor 173 to the voltage source of minus 5 volts. If the voltage on tap 45 is initially at a positive potential, diode 175 and transistor 156 will pull it towards ground. If tap 45 is originally at a minus voltage, diode 176 and transistor 172 will pull it towards ground potential. When control signal E3 is at 0 volts, transistor 166 is non-conducting and transistor 168 is conducting pulling the base of transistor 172 towards ground potential causing transistor 172 to be non-conducting. With transistors 166 and 172 non-conducting lead 149 is isolated from ground potential.

Obviously from the circuit as shown in Figure 2, certain control signal combinations of control signals E1, E2 and E3 are not allowed since either power supply 140 or 150 will be coupled to ground potential or to one another. A truth table for acceptable logic levels of control signals E1, E2 and E3 is shown in Table 1.

## Table I

| E1 | E2 | E3 | IMS Element |
|----|----|----|-------------|
| + | + | + | not allowed |
| + | + | o | +250 volts |
| + | o | + | not allowed |
| + | o | o | not allowed |
| o | + | + | ground |
| o | + | o | no connection |
| o | o | + | not allowed |
| o | o | o | -250 volts |

Controller 120 which may be for example a microprocessor which can supply control signals E1, E2 and E3 for each element control circuit 71-81 over leads 82-114. One power supply 140 and 150 may be used for element control circuits 71-81 with leads 141 connected together and leads 151 connected together.

A method and apparatus has been described for detecting ions comprising an ion mobility spectrometer and a plurality of element control circuits which are coupled to taps which in turn are coupled to concentric rings spaced apart along the longitudinal axis of the ion mobility spectrometer for applying voltages to selected taps to move selected ions as a function of their mobility in the reaction region and in the drift region. Each element control circuit has timing and control signals coupled to it from a controller. A relatively low voltage power supply of plus 250 volts and minus 250 volts is switched at selected times at the element control circuit to it's respective tap.

## Claims

1. An ion mobility spectrometer for detecting ions comprising:
a first inlet (12) for admitting a sample gas (13) to be detected into a reaction region (14),
said reaction region (14) having a second inlet (16) for admitting a carrier gas (18),
said reaction region (14) having a means (20) for ionizing said sample gas (13),
said reaction region (14) having a means (24,26,28) for generating an electric field therein to move ions (30) of the sample gas (13) towards a drift region (32),
said drift region (32) having

6

a shutter grid (34) for holding said sample ions (30) at first times and for admitting said sample ions (30) at second times into said drift region, said drift region having a longitudinal axis (36), and spaced apart conductive elements (40-44) for generating an electrical field in said drift region (32) parallel to said longitudinal axis (36), characterized by each conductive element (40-44) having a tap (49-53) for connecting a voltage thereto,

each tap (40-44) coupled to an element control circuit (75-79), each said element control circuit (75-79) responsive to control signals for coupling a voltage of a selected magnitude to said respective tap (40-44),

first means (120) for generating respective control signals coupled to respective element control circuits (75-79),

said drift region (32) having a collector (60) for collecting charge from said sample ions (30) and circuit means (134) for generating a signal indicative of the quantity of ions collected by said collector (60).

2. The ion mobility spectrometer of Claim 1 characterized by said second means including a controller (120) for generating first control signals for at least two element control circuits during a first time interval to couple a first voltage between two respective conductive elements.

3. The ion mobility spectrometer of Claim 2 characterized by said controller (120) including third means for generating second control signals for at least two additional element control circuits during a second time interval to couple a second voltage between two respective conductive elements and fourth means for removing said first control signals.

4. A method of operating an ion mobility spectrometer (10) comprising the steps of admitting a sample gas (13) into a reaction region (14) forming ions (30) from said sample gas (13),

moving said ions (50) toward a drift region (32),

admitting said ions (30) into said drift region (32) at a first time,

applying an electric field to said ions (30) by placing a plurality of conductive elements (40-44) in said drift region (32) spaced apart along a longitudinal axis (36) for forming an electric field between said conductive elements parallel to said longitudinal axis (36) characterized by,

coupling a first voltage at said first time between two of said plurality of conductive elements (34, 41) to form an electric field there between to move ions of interest admitted into said drift region (32),

uncoupling said first voltage at a second time, and coupling a second voltage at a third time between two of said plurality of conductive elements (40, 42) to form an electric field therebetween to move said ions of interest further along in said drift region.

5. The method of Claim 4 further characterized by the step of uncoupling said second voltage at a fourth time,

repeating said steps of coupling and uncoupling a second voltage until said ions of interest reach a collector (60), and

generating a signal indicative of the quantity of said ions of interest collected by said collector (60).

FIG. I

*FIG. 2*

| | DOCUMENTS CONSIDERED TO BE RELEVANT | | EP 88111509.1 |
|---|---|---|---|

| Category | Citation of document with indication, where appropriate, of relevant passages | Relevant to claim | CLASSIFICATION OF THE APPLICATION (Int. Cl.⁴) |
|---|---|---|---|
| D,Y | <u>US - A - 4 378 499</u> (SPANGLER) <br> * Fig. 1 * | 1 | H 01 J 49/40 |
| Y | <u>EP - A1 - 0 253 155</u> (ALLIED CORP.) <br> * Fig. 1 * | 1 | |

| | | | TECHNICAL FIELDS SEARCHED (Int. Cl.⁴) |
|---|---|---|---|
| | | | H 01 J 49/00 <br> G 01 N 27/00 |

The present search report has been drawn up for all claims

| Place of search | Date of completion of the search | Examiner |
|---|---|---|
| VIENNA | 31-01-1989 | KUNZE |